Europäisches Patentamt

European Patent Office

Office européen des brevets

(19)

(11) Numéro de publication: **0 135 414**
**A1**

## (12) DEMANDE DE BREVET EUROPEEN

(21) Numéro de dépôt: **84401492.8**

(22) Date de dépôt: **13.07.84**

(51) Int. Cl.⁴: **H 04 N 5/14**
**H 04 N 1/40**

(30) Priorité: **13.07.83 FR 8311668**

(43) Date de publication de la demande:
**27.03.85 Bulletin 85/13**

(84) Etats contractants désignés:
**AT BE CH DE FR GB IT LI LU NL SE**

(71) Demandeur: **SOCIETE D'OPTIQUE, PRECISION ELECTRONIQUE ET MECANIQUE - SOPELEM**
**102 rue Chaptal**
**F-92300 Levallois-Perret(FR)**

(72) Inventeur: **Moirez, Jacques**
**4 Avenue des Gobelins**
**F-75005 Paris(FR)**

(72) Inventeur: **Grandjacques, Benoit**
**5 Résidence Dulac Impasse Dulac**
**F-94700 Maisons-Alfort(FR)**

(74) Mandataire: **Saint-Martin, René et al,**
**CREUSOT-LOIRE 15 rue Pasquier**
**F-75383 Paris Cedex 08(FR)**

(54) **Capteur opto-électronique de saisie d'image.**

(57) L'invention se rapporte à un capteur opto-électronique de saisie d'image.

Il comporte un photodétecteur (6) qui reçoit l'image d'un sujet (1) et est couplé à un circuit électronique (8) délivrant des signaux logiques et il est caractérisé par le fait qu'il comporte un séparateur (5) pour diviser le faisceau lumineux venant du sujet en deux voies (22, 23) sur l'une desquelles est disposé ledit photodétecteur (6), un second photodétecteur (7) étant disposé sur l'autre voie et qu'il comporte au moins un système optique (3, 41, 42) capable de projeter une image nette sur l'un des photodétecteurs (6) et une image floue sur l'autre photodétecteur (7), le circuit électronique (8) étant constitué de moyens pour effectuer la différence entre le signal délivré par le photodétecteur (6) recevant l'image nette et le signal délivré par le photodétecteur (7) recevant l'image floue et pour délivrer un signal logique représentatif de cette différence.

Fig 1

## Capteur opto-électronique de saisie d'image

La présente invention se rapporte à un capteur opto-électronique de saisie d'image donnant un signal logique représentant cette image et pouvant être utilisé notamment comme périphérique d'ordinateur.

On utilise déjà, en analyse d'image, un détecteur d'image (barrette de photodétecteurs) recevant une image et dont le signal est, par l'intermédiaire d'un circuit électronique, numérisé et envoyé à un ordinateur.

Pour obtenir une finesse suffisante, chaque image est décomposée en une multitude de points (pixels). A chaque point élémentaire de l'image (pixel) est affecté un nombre exprimant un niveau de gris. L'image sous sa forme numérique peut être transmise, stockée ou traitée. Dans tous les cas, le grand nombre de points élémentaires et le grand nombre de niveaux de gris constitue un handicap. Dans le cas du stockage dans un ordinateur, il faut une grande capacité de mémoire. Dans le cas du traitement d'image, il faut un temps long de calcul et une grande rapidité de calcul du calculateur.

Dans de nombreux cas les niveaux de gris n'apportent pas d'informations réelles : c'est le cas lorsqu'on cherche à extraire d'une image des informations telles que présence ou absence d'un objet, comptage de particules ou mesure de paramètres tels que la longueur d'un contour ou la surface d'un objet. On s'intéresse alors à la silhouette ou au contour de l'objet, les plages de teintes uniformes ou de dégradés étant moins intéressantes.

La présente invention a pour but de fournir un capteur de saisie d'image qui ne retient que les points appartenant à des zones de forts contrastes et réduit le nombre de niveaux de gris à deux. Cette concentration des données permet de stocker ces données dans un ordinateur en utilisant une faible capacité de mémoire ou de traiter plus rapidement ces données. Il permet de retrouver des contrastes relativement faibles noyés dans des variations lentes d'éclairement qui sont éliminées. Cela révèle les contours avant tout traitement informatique.

Le capteur selon l'invention comporte un photodétecteur qui reçoit l'image d'un sujet et est couplé à un circuit électronique délivrant des signaux logiques,et il est essentiellement caractérisé par le fait qu'il comporte un séparateur pour séparer le faisceau lumineux venant du sujet en deux voies sur l'une desquelles est disposé ledit photodétecteur, un second photodétecteur étant disposé sur l'autre voie et qu'il comporte au moins un système optique capable de projeter une image nette sur l'un des photodétecteurs et une image floue sur l'autre photodétecteur, le circuit électronique étant constitué de moyens pour effectuer la différence entre le signal délivré par le photodétecteur recevant l'image nette et le signal délivré par le photodétecteur recevant l'image floue et pour délivrer un signal logique représentatif de cette différence.

Selon une caractéristique, le système optique est constitué par un projecteur télécentrique disposé avant le séparateur et un des photodétecteurs est disposé de manière à recevoir une image nette, l'autre photodétecteur étant disposé de manière à recevoir une image floue.

Selon une caractéristique, le système optique est constitué par deux objectifs placés chacun sur l'une des voies, en arrière du séparateur, l'un des objectifs étant un objectif donnant une image floue sur un photodétecteur.

Selon une caractéristique, le circuit électronique comprend un circuit soustracteur recevant en entrée les signaux fournis par les photodétecteurs et fournissant un signal de sortie à un circuit de mise en forme logique.

L'invention va maintenant être décrite avec plus de détails en se référant à des modes de réalisation donnés à titre d'exemples et représentés par les dessins annexés.

La figure 1 représente un premier mode de réalisation du capteur opto-électronique selon l'invention.

La figure 2 représente un second mode de réalisation du capteur selon l'invention.

La figure 3 représente un schéma du circuit électronique faisant partie du capteur.

Les figures 4, 5, 6, 7 représentent les signaux en différents points du circuit électronique du capteur.

Le capteur représenté par les figures sert à examiner, selon l'axe optique 21, un sujet 1 constitué par un objet réel (pièce, film, etc ...) ou par une image.

Le capteur comporte un séparateur 5 qui divise un faisceau paraxial venant du sujet en deux faisceaux dirigés selon les axes 22 et 23, ce dernier prolongeant l'axe 21. La surface semi-transparente 51 du séparateur est par exemple inclinée à 45° par rapport à l'axe optique 21 de manière que l'axe 22 soit perpendiculaire à 21-23. Le séparateur 5 est constitué par un cube séparateur ou par une lame semi-transparente.

3

0135414

Des photodétecteurs 6 et 7 sont centrés respectivement sur les axes 22 et 23, en arrière du séparateur 5. Ils reçoivent des images du sujet 1, ces images étant projetées par un système optique 3 ou 41,42. Ces photodétecteurs 6 et 7, de préférence identiques, sont constitués chacun par une barrette de photodiodes, une matrice de photodiodes ou encore par un tube utilisé dans les caméras de télévision. Dans le cas où on utilise des barrettes, celles-ci sont disposées soit parallèlement soit dans un même plan. Ces barrettes 6, 7 et le séparateur 5 sont fixés sur une platine 9 déplacée perpendiculairement à l'axe 21 et à l'axe de la barrette 7 de manière à effectuer le balayage de la surface de l'objet.

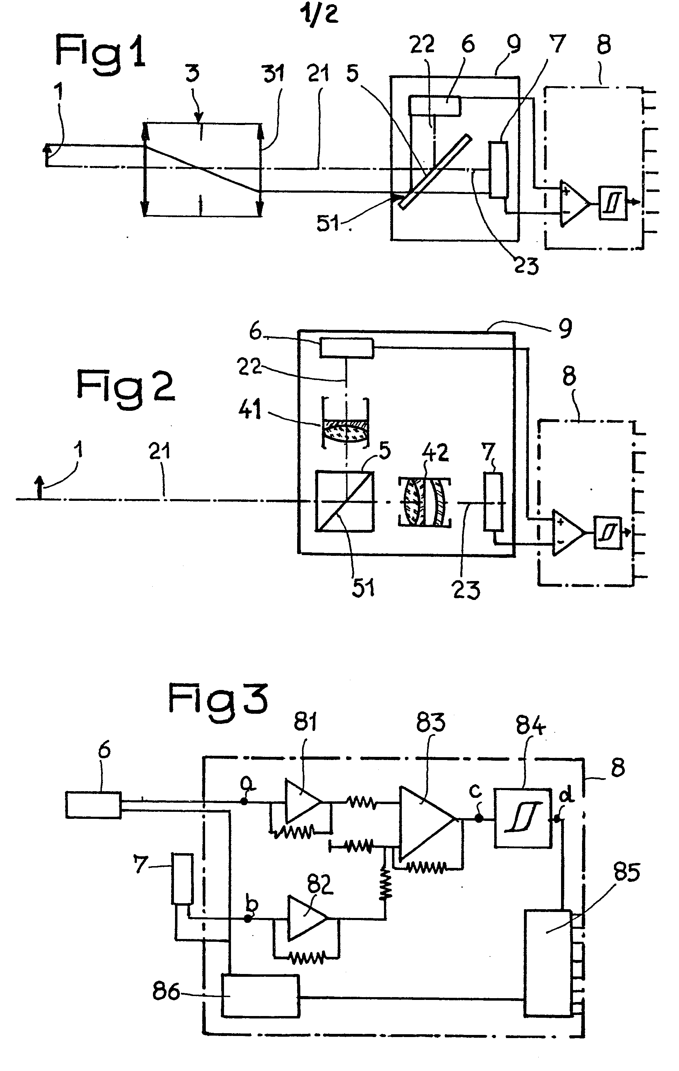

Dans le mode de réalisation de la figure 1, le système optique de projection d'images est constitué par un objectif télécentrique qui est centré sur l'axe 21, en avant du séparateur 5. Cet objectif, connu en soi, présente une pupille dans le plan focal avant du dernier élément 31 et donne un rayon moyen émergeant parallèle à l'axe optique 21, l'image étant dans le plan focal arrière. Le photodétecteur 6, dit de voie nette, est positionné de manière que sa surface sensible soit placée dans le plan image alors que le photodétecteur 7, dit de voie floue, est positionné de manière que sa surface sensible soit sensiblement décalée du plan image. De ce fait, le photodétecteur 6 de voie nette reçoit une image nette alors que le photodétecteur 7 de voie floue reçoit une image défocalisée. L'objectif télécentrique a l'avantage de donner des images de même taille au niveau des photodétecteurs 6 et 7 qui pourtant ne sont pas symétriques par rapport à la surface 51 du séparateur.

Le photodétecteur 7 de la voie floue peut être déplacé le long de l'axe 23 de manière à régler le flou.

Dans le mode de réalisation de la figure 2, le système optique de projection d'images se compose d'un objectif ordinaire 41, centré sur l'axe 22, qui projette l'image du sujet sur le photodétecteur 6 et d'un objectif 42, centré sur l'axe 23, qui projette l'image du sujet sur le photodétecteur 7. Cet objectif 42 donne une image de mêmes caractéristiques géométriques que celles de l'image nette donnée par l'objectif 41 mais cette image présente un défaut de mise au point dans le plan du photodétecteur 7. Cet objectif 42 comprend la même structure que l'objectif 41 plus une lentille limitée par deux faces sphériques concentriques et centrées sur le centre de la pupille de l'objectif. Cette lentille qui est divergente ne dévie pas le rayon moyen. Elle crée un défaut de mise au point sur le photodétecteur 7 symétrique du photodétecteur 6 par rapport à 51 sur la voie 23 sans changer de grandissement de l'image.

Les photodétecteurs 6 et 7 sont couplés à un circuit électronique 8 qui effectue, en analogique, la différence entre le signal fourni par le photodétecteur 6 de voie nette et le signal fourni par le photodétecteur 7 de voie floue et qui met en forme le signal différentiel ainsi obtenu pour le convertir ensuite en un signal logique.

Ce circuit électronique est représenté en détail par la figure 3. Il se compose de deux amplificateurs d'adaptation 81 et 82 qui reçoivent respectivement les signaux analogiques fournis par les photodétecteurs 6 et 7. Ces amplificateurs fournissent des signaux de sortie analogiques à un amplificateur opérationnel 83 du type soustracteur. Cet amplificateur 83 fournit un signal de sortie proportionnel à la différence des signaux reçus sur ses entrées. Le signal analogique de sortie de l'amplificateur 83 est injecté à une bascule de Schmitt 84 dont le signal de sortie est un signal logique binaire présentant un niveau haut lorsque le signal d'entrée est au-dessus d'un seuil et un niveau bas lorsque le signal d'entrée est en-dessous d'un seuil proche du précédent. L'un quelconque des amplificateurs doit avoir une correction de niveau continu, connue en soi, pour ajuster la composante continue du signal par rapport au seuil nécessaire à la bascule de Schmitt. Le signal de sortie de la bascule de Schmitt est envoyé à un convertisseur série-parallèle 85 contrôlé par une horloge 86 qui commande par ailleurs en synchronisme les photodétecteurs 6 et 7. La sortie -8 ou 16 bits- du convertisseur 85 est couplée à un ordinateur ou à tout autre dispositif électronique de traitement logique.

Le fonctionnement du capteur va maintenant être expliqué.

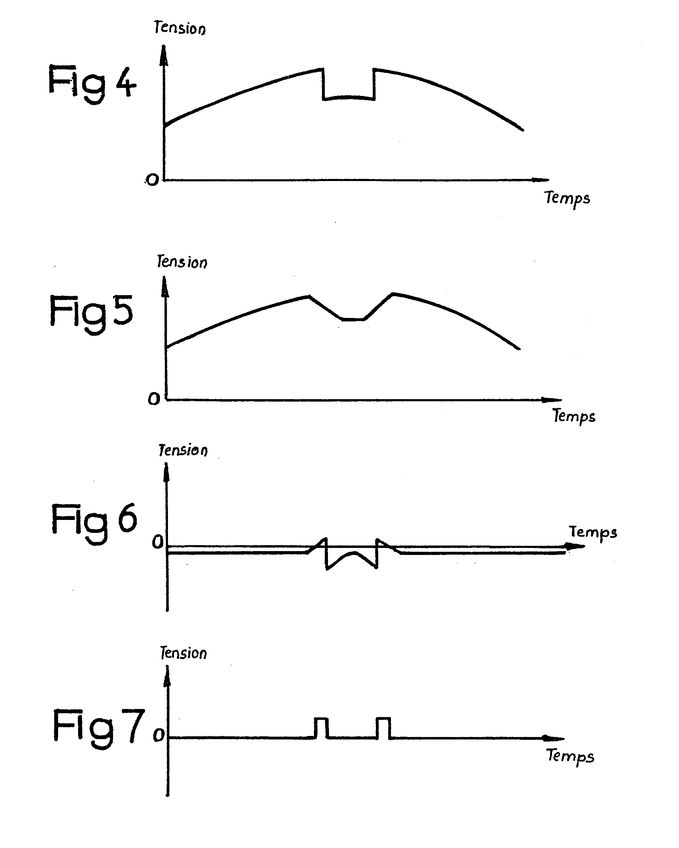

Une image nette et une image floue sont projetées respectivement sur le photodétecteur 6 et sur le photodétecteur 7. Les signaux de sortie de ces photodétecteurs 6 et 7 (en a et b sur la figure 3) sont représentés par les figures 4 et 5 respectivement. Le signal "net" (figure 4) donné par le photodétecteur 6 présente un décrochement limité par des fronts (montant et descendant) bien marqués, qui correspondent aux contours de l'objet. Le signal "flou" donné par le photodétecteur 7 présente des fronts (montant et descendant) plus estompés c'est-à-dire à plus faibles pentes.

Le signal de sortie de l'amplificateur opérationnel 83 (point c de la figure 3) est représenté sur la figure 6. Ce signal conserve les fronts même de faibles amplitudes y compris ceux qui correspondent à des variations brutales d'éclairement se produisant parallèlement à la direction de balayage (parallèlement à la barrette nette) et ne conserve plus les variations lentes même importantes de l'éclairement du fond lumineux. Le signal mis en forme par la bascule 84 (point d de la figure 3) est représenté par la figure 7.

Le traitement du signal effectué par les amplificateurs 81, 82, 83 varie selon les gains de ces amplificateurs et peut consister en une simple différence (signal net - signal flou) ou en une différence pondérée (signal net - (signal flou x coefficient)) (ce coefficient étant réglable par le gain des amplificateurs 81, 82) ce qui se rapproche plus de la vision humaine.

On peut enfin effectuer un compromis entre les deux solutions en jouant sur les gains des amplificateurs 81, 82 et le seuil de la bascule 84 pour tenir compte du bruit inhérent aux photodétecteurs.

Il est bien entendu que l'on peut, sans sortir du cadre de l'invention, imaginer des variantes et perfectionnements de détail et de même envisager l'emploi de moyens équivalents.

Le flou pourrait notamment être obtenu sur la voie 23 en interposant un dépoli ou un élément diffusant.

Au lieu de déplacer l'ensemble formé par le séparateur 5 et les barrettes 6, 7, il serait possible de déplacer le sujet.

6 0135414

REVENDICATIONS

1.- Capteur opto-électronique pour analyse d'image, comportant un photodétecteur (6) qui reçoit l'image d'un sujet (1) et est couplé à un circuit électronique (8) délivrant des signaux logiques,

caractérisé par le fait qu'il comporte un séparateur (5) pour diviser le faisceau lumineux venant du sujet en deux voies (22, 23) sur l'une desquelles est disposé ledit photodétecteur (6), un second photodétecteur (7) étant disposé sur l'autre voie et qu'il comporte au moins un système optique (3, 41, 42) capable de projeter une image nette sur l'un des photodétecteurs (6) et une image floue sur l'autre photodétecteur (7), le circuit électronique (8) étant constitué de moyens pour effectuer la différence entre le signal délivré par le photodétecteur (6) recevant l'image nette et le signal délivré par le photodétecteur (7) recevant l'image floue et pour délivrer un signal logique représentatif de cette différence.

2.- Capteur selon la revendication 1,
caractérisé par le fait que le système optique est constitué par un objectif télécentrique (3) disposé avant le séparateur (5), l'un des photodétecteurs (6) étant disposé de manière à recevoir une image nette, l'autre photodétecteur (7) étant disposé de manière à recevoir une image floue.

3.- Capteur selon la revendication 1,
caractérisé par le fait que le système optique est constitué par deux objectifs (41, 42) placés chacun sur l'une des voies (22, 23), en arrière du séparateur (5), l'un de ces objectifs (41) étant un objectif ordinaire, l'autre objectif (42) étant un objectif donnant une image floue sur un photodétecteur (7).

4.- Capteur selon la revendication 3,
caractérisé par le fait que l'objectif donnant une image floue comporte une lentille limitée par deux faces sphériques concentriques.

5.- Capteur selon l'une quelconque des revendications précédentes,
caractérisé par le fait que le circuit électronique (8) est constitué par un circuit soustracteur (83) recevant en entrée les signaux fournis par les photodétecteurs (6, 7) et fournissant un signal de sortie à un circuit de mise en forme logique (84).

# Fig 1

# Fig 2

# Fig 3

**Fig 4**

Tension

0 — Temps

**Fig 5**

Tension

0 — Temps

**Fig 6**

Tension

0 — Temps

**Fig 7**

Tension

0 — Temps

Office européen
des brevets

**RAPPORT DE RECHERCHE EUROPEENNE**

**0135414**
Numéro de la demande

EP 84 40 1492

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | US-A-4 222 077 (YAMADA) <br> * Colonne 2, ligne 61 - colonne 3, ligne 52 * | 1,5 | H 04 N 5/14 <br> H 04 N 1/40 |
| | --- | | |
| A | PATENTS ABSTRACTS OF JAPAN, vol. 5, no. 86, 5 juin 1981, page 83E60; & JP - A - 56 32870 (FUJI SHASHIN FILM K.K.) 02-04-1981 | 1 | |
| | --- | | |
| A | US-A-3 987 243 (SCHWARTZ) <br> * Figure 1 * | 1 | |
| | ----- | | |

|  |
|---|
| DOMAINES TECHNIQUES RECHERCHES (Int. Cl.4) |
| H 04 N 5/14 <br> H 04 N 1/40 |

Le présent rapport de recherche a été établi pour toutes les revendications

| Lieu de la recherche <br> LA HAYE | Date d'achèvement de la recherche <br> 29-10-1984 | Examinateur <br> YVONNET J.W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82